# EUROPEAN PATENT SPECIFICATION

(11) **EP 4 181 707 B1**
(45) Date of publication and mention of the grant of the patent: **01.05.2024**
(21) Application number: 21740099.3
(22) Date of filing: 12.07.2021
(51) Int. Cl.: A24F 40/46, A24F 40/465, A24F 40/90, H01M 10/42, H01M 10/46, H01M 10/48, H01M 10/615, H01M 10/623, H01M 10/63, H01M 10/635, H01M 10/637, H01M 10/657, H01M 10/6571, A24F 40/57, A24F 40/53

(54) **ELECTRONIC DEVICE WITH MULTI-FUNCTIONAL BATTERY HEATER**
ELEKTRONISCHE VORRICHTUNG MIT MULTIFUNKTIONALEM BATTERIEERWÄRMER
DISPOSITIF ÉLECTRONIQUE DOTÉ D'UN CHAUFFAGE DE BATTERIE MULTIFONCTIONNEL

(30) Priority: 14.07.2020 EP 20185630
(43) Date of publication of application: 24.05.2023
(73) Proprietor: Philip Morris Products S.A., 2000 Neuchâtel (CH)
(72) Inventor: RIVA REGGIORI, Riccardo, 2000 Neuchâtel (CH); SEREDA, Alexandra, 2000 Neuchâtel (CH); LOPEZ, Serge, 2000 Neuchâtel (CH); BRANHAM, Edward, 2000 Neuchâtel (CH); LAWRENSON, Matthew, 68163 Mannheim (DE)
(74) Representative: Abitz & Partner
(86) International application number: PCT/EP2021/069347
(87) International publication number: WO 2022/013158

(56) References cited:
- WO-A1-2019/238813
- CN-U- 210 250 238
- US-A1- 2008 053 979
- US-A1- 2019 320 717
- US-B2- 10 446 888

## Description

The present disclosure relates to an electronic device, which is an aerosol-generating device. The present disclosure further relates to an aerosol-generating system comprising an aerosol-generating device and an aerosol-generating article. The present disclosure further relates to a method for operating the electronic device.

It is known to provide an electronic device which utilizes a battery for a power supply. It is known to provide an aerosol-generating device for generating an inhalable vapor which utilizes a battery for a power supply. Such devices may heat an aerosol-forming substrate to a temperature at which one or more components of the aerosol-forming substrate are volatilized without burning the aerosol-forming substrate. The aerosol-generating article may have a rod shape for insertion of the aerosol-generating article into a cavity, such as a heating chamber, of the aerosol-generating device. A heating element may be arranged in or around the heating chamber for heating the aerosol-forming substrate once the aerosol-generating article is inserted into the heating chamber of the aerosol-generating device. The power required for heating the aerosol-forming substrate may be provided by a battery.

It is known that the operation of batteries, for example lithium-ion batteries, is problematic at low temperatures. It also known that the storage of batteries, for example lithium-ion batteries, is problematic at low temperatures. Low temperatures may be temperatures below a range of 0 degree Celsius to 5 degree Celsius. At low temperatures, both capacity and voltage of a battery may be reduced. Such a situation may render an electronic device being powered by a battery inoperable at low temperatures. Also, between operations, when the device is not in use, both capacity and voltage of the battery may be reduced in a low temperature environment. Also, charging of a rechargeable battery in an electronic device at low temperatures may damage the battery.

It is known to include additional heaters in electronic devices to heat the batteries and thus prevent the batteries from being too cold. Generally, including an additional heater requires various additional components to be included into the device. Including additional components may negatively lead to higher costs of a device. Including additional components may lead to the device becoming heavier. It may be uncomfortable for a user to carry a heavy device. Including additional heater components may lead to the device inadvertently becoming bigger. It may be uncomfortable for a user to carry a big device. Also, if the device has multiple inductive circuits, and the various inductors are layered close to each other, their mutual inductance may reduce their effectiveness.

It is also known that the operation of batteries is problematic at too high temperatures. The longevity of a battery, for example a lithium-ion battery, may be adversely affected when the battery is exposed to too high temperatures. A battery which is unchangingly heated by an additional heater during use may be exposed to too high temperatures.

WO 2019/238813 A1 describes an aerosol-generating device for generating an inhalable aerosol. For optimizing battery life in cold temperatures, heat produced by a heating element for heating an aerosol generating substrate is also used to heat the battery.

US 2019/0320717 A1 discloses an aerosol-generating system comprising an electrically operated aerosol-generating element, a first electrochemical energy storage device (EESD) configured to supply electrical power to the aerosol-generating element, and an EESD temperature control system.

US 10,446,888 B2 relates to a battery heating system for electronic devices.

US 2008/0053979 A1 is directed to a hand warmer.

It would be desirable to have an electronic device which may prevent the battery from being too cold during operation. It would be desirable to have an electronic device that utilizes existing components already included in the device for battery heating. It would be desirable to have an electronic device that is kept light to be comfortable for a user to carry. It would be desirable to have an electronic device that is kept small to be comfortable for a user to carry. It would be desirable to have an electronic device that may avoid unchangingly heating the battery up to adversely high temperatures.

According to an embodiment of the invention, there is provided an electronic device as described in claim 1.

Due to providing the heater with the two different heating functions, a disadvantageously cold battery may be heated to a desired temperature by the first heating function. By the first heating function, a disadvantageously cold battery may be heated to a desired temperature during operation of the device. By the first heating function, a disadvantageously cold battery may be heated to a desired temperature between operations of the device. Due to providing the heater with the two different heating functions, excessive heating of the battery may be prevented by switching the heater from the first heating function to the second heating function. Due to providing the heater with the two different heating functions, existing components of the device may be utilized for heating the battery. Implementation of an extra battery heater into the device may be avoided. Production costs may be saved. The device may be designed one or both of smaller and more lightweight. Portability and convenience of the device may be improved.

It is known to have an electronic device comprising a heater for performing a heating function, wherein the heating function may be a main function of the electronic device. The main function of such an electronic device may be referred to herein as the 'second heating function'. In the context of the present disclosure, the electronic device is an aerosol-generating device. An aerosol-generating device may comprise a heater for heating an aerosol-forming substrate as a main function of the device. The function of heating the aerosol-forming substrate of such an aerosol-generating device may be referred to herein as the 'second heating function'. Using such a heater included in an electronic device, which is an aerosol-generating device, to heat a battery of the device may be referred to herein as the 'first heating function'.

The battery may be configured as a power supply for powering one or more functions of the electronic device. The battery may be configured as a power supply for powering the heater for heating the battery. The battery may be configured as a power supply for powering one or both of the first heating function and the second heating function of the heater. The battery may be any type of battery as described herein.

The electronic device may comprise a controller configured for determining a temperature of the battery and activating or deactivating the first heating function of the heater based on the temperature. The electronic device may comprise a controller configured for determining a temperature of the battery and switching between different functions of the heater based on the temperature. The temperature may be a current temperature of the battery. The temperature may be a predicted future temperature of the battery. The first heating function may be activated when the temperature is below a pre-set minimum temperature.

The electronic device may comprise a temperature sensor. The controller may be configured for determining the temperature based on a signal derived from the temperature sensor. The controller may be configured for determining the temperature based on a temperature measured by the temperature sensor. The temperature sensor may continuously monitor the temperature. The temperature sensor may monitor the temperature at time internals short enough that the temperature of the battery will not dramatically change between measurements. The deduction of the temperature may be based on an electric current measurement of the temperature sensor.

The device may further comprise a memory storage configured for storing data successively measured by the temperature sensor. A time series of measurements made by the temperature sensor may be stored in the memory storage, and the trend of data may be used to predict a future temperature of the battery. The controller may be configured to activate or deactivate the first heating function based on a temperature trend derived from the stored temperature data.

The temperature sensor may sense one or both of the temperature of the environment of the electronic device and the temperature of the battery. For example, the temperature sensor may be located on or closely adjacent to the battery and the measurement may be assumed to be or to approximately be the temperature of the battery.

The temperature sensor may sense the temperature of another component of the electronic device. The temperature of another component of the electronic device may be used to estimate the temperature of the battery. For example, the temperature sensor may be placed on a part of the electronic device which is not on the battery or not adjacent to the battery. In that case the thermal properties of the form and materials of the device may be used to calculate a likely temperature of the battery. Such an assessment may be used to estimate the temperature of the battery.

The electronic device may be configured for activating or deactivating the first heating function in response to a temperature sensed by the temperature sensor. The electronic device may be configured for switching between the first heating function and the second heating function in response to a temperature sensed by the temperature sensor. The electronic device is configured for switching between the first and second heating functions of the heater in dependence of a temperature of the battery. The electronic device may be configured for activating or deactivating the first heating function in dependence of a temperature of the environment of the electronic device. The electronic device may be configured for switching between the first and second heating functions of the heater in dependence of a temperature of the environment of the electronic device.

The electronic device may comprise a communication unit configured for receiving external data. The controller may be configured for determining the temperature based on external data received by the communication unit. The external data may be received from an external data source. Determining the temperature based on external data may allow to determine the temperature of the battery without using a temperature sensor within the electronic device.

A measurement of the temperature sensor may be combined with the external data received from an external data source. These temperature measurements may be used directly, or as part of an assessment to estimate the current temperature of the battery.

The external data source may be an external device such as a smartphone. The external device may have an external sensor, for example, one or more of a temperature sensor, a humidity sensor, an altitude sensor, and a location sensor. The external data source may be an additional sensor of the electronic device itself, for example a motion sensor. The external data source may be used to estimate the current and likely future temperature of the battery.

The external data source may be used to detect temperature directly. The external data source may be used to detect a situation where temperature is likely to change. For example, a motion sensor may detect when the electronic device is being taken out of a pocket. A predicted temperature trend of the battery may be derived from the external data source. For example, a predicted temperature trend may be derived based on GPS data and weather forecast data received from a smartphone.

Where sensor data is taken from sensors of an external device, the communication circuitry between the electronic device and the external device may be short-range in nature. A short-range communication circuitry may use bluetooth, NFC, infra-red or similar technologies. In that case, the location, environmental measurements etc. of the external data source may be assumed to be similar to that of the electronic device. For example, a temperature experienced by a smartphone held next to the electronic device may also be assumed to be the temperature experienced by the electronic device itself if the smartphone and the electronic device are connected by a short-range or near-field connection method.

The device may comprise a timer configured for automatically activating or deactivating the first heating function or switching between the first and second heating functions based on a pre-set time interval. The pre-set time interval may begin with the electronic device being switched on. When electronic the device is being switched on the first heating function may be activated for heating the battery. After a pre-set time interval the first heating function may be deactivated.

The heater may comprise an induction coil. The first heating function may be one or both of resistively and inductively heating the battery. The second heating function may be one or both of a resistive and an inductive heating function. The heater may comprise only one single induction coil for performing both the first and second functions.

The heater may be configured for further performing a third function. The third function may be different form the first heating function and from the second heating function. The third function may be a third heating function. The third function may be charging the battery. The third function may be inductively charging the battery. The third function may be inductively charging the battery, the heater may comprise a charging coil, and the first heating function may be one or both of resistively heating the battery and inductively heating the battery.

The heater may comprise only one single induction coil for performing both the first, second and third functions. The heater may comprise a single induction coil which is used for both resistively heating the battery, a second inductive heating function, and inductively charging the battery. The heater may comprise a single induction coil which is used for both inductively heating the battery, a second inductive heating function, and inductively charging the battery.

The device may be configured for switching between one or more of the first heating function, the second heating function, and the third function of the heater. The controller of the device may be configured for switching between one or more of the first heating function, the second heating function, and the third function of the heater.

The heater may be configured for resistively heating the battery as a first heating function and the second heating function may be an inductive heating function. The heater may comprise one single induction coil which is used for both the first and second heating functions. By using the induction coil of the second heating function also for resistively heating the battery, an additional resistive heater for heating the battery may be omitted. Thereby, one or more of costs, components, and complexity of the device may be reduced.

The heater may be an inductive heater comprising a first susceptor for heating the battery as the first heating function and a second susceptor for performing the second heating function. The device may comprise one single induction coil to heat both the first susceptor and the second susceptor. The electronic device may comprise a heating chamber, a first susceptor in thermal contact with the battery, and a second susceptor in thermal contact with the heating chamber, wherein the second heating function is inductively heating the heating chamber. The heating chamber may be heated by heating the second susceptor.

The electronic device may comprise a resistive element for additionally heating the battery. The resistive element may be serially connectable to the heater. The resistive element may be serially connectable to the heater based on a temperature-dependent actuation mechanism. The temperature-dependent actuation mechanism may be activated by a mechanical process dependent on the temperature. The temperature-dependent actuation mechanism may include a bimetallic strip. The mechanically activated temperature-dependent actuation mechanism may be used as a failsafe in addition to an electronically controlled activation of the first heating function.

The electronic device may comprise an additional inductive element for altering the inductive properties of the induction coil. Thereby, the amount of heat induced within a susceptor may be varied. Thereby, the temperature of the battery in thermal proximity to the susceptor may be varied. The additional inductive element may be serially or parallelly connectable to the induction coil. The additional inductive element may be serially or parallelly connectable to the induction coil based on a temperature-dependent actuation mechanism as described herein.

One or both of the battery and the heater may be mounted on a flexible substrate.

Some components mounted or printed on the flexible substrate may also be flexible, for example, wires or tracks may be bent, allowing components to remain in electrical contact even when the flexible substrate is bent or folded or rolled into a tube.

The flexible substrate may further comprise control electronics of the device. The flexible substrate may be rolled into a tube. By rolling the flexible substrate into a tube, the flexible substrate assumes a tubular shape.

Both of the heating element and the control electronics may be printed on the flexible substrate, for example using metallic inks. During assembly, the flexible substrate comprising on or both of the battery and the heater can be brought into a desired shape, e.g. into a tubular shape, by rolling, due to the flexible nature of the substrate.

The flexible substrate may be electrically insulating. The flexible substrate may be a flexible dielectric substrate. The flexible substrate may comprise polyimide. The flexible substrate may consist of polyimide. The flexible substrate may comprise any suitable material, and is preferably a material that is able to tolerate high temperatures, such as temperatures in the range 150 degrees Celsius to 250 degrees Celsius, or in the range from 250 degrees Celsius to 350 degrees Celsius, and rapid temperature changes. An example of a suitable material is a polyimide film, such as Kapton^{®}.

Individual portions of the flexible substrate can be folded to lie on top of each other before being rolled into a tube. This layered arrangement of the individual portions may be made easier and optimally using the available space, if the individual portions have a similar or the same shape. A first portion of the flexible substrate may be arranged at least partly coaxially surrounding the outer perimeter of a second portion of the flexible s substrate. After being rolled into a tube, the first and second portions of the flexible substrate may have a hollow tubular shape. In one embodiment, the flexible substrate is laminated before being rolled into a tube.

The coaxial arrangement of the first portion of the flexible substrate with respect to the outer perimeter of the second portion of the flexible substrate may create a compact arrangement, for example a compact heater. The compact heater may be arranged around the cavity of the aerosol-generating device for heating the aerosol-forming substrate of the aerosol-generating article received in the cavity.

The flexible substrate may have a thickness of between 0.02 millimeters to 4.50 millimeters, preferably between 0.035 millimeters to 2.75 millimeters.

The flexible substrate may have a hollow cylindrical shape. The flexible substrate may circumscribe a cavity of the electronic device. The cavity may be a heating chamber. One or both of the heater and the battery may have a hollow cylindrical shape. The battery and the heater may be coaxially aligned.

A longitudinal axis of the electronic device may be parallel to one or both of a longitudinal axis of the heater and the battery. A longitudinal axis of the battery may be parallel to a longitudinal axis of the heater. The electronic device may comprise a cylindrical heating chamber and one or both of the heater and the battery may parallel to a longitudinal axis of the heating chamber.

The heater may be an electrical heater. The heater may be one or both of a resistive heater and an inductive heater. An inductive heater may comprise an inductive element. The inductive element may be an induction coil. An inductive heater may comprise an induction coil and a susceptor. The heater may comprise one or more heating elements.

The heating element may be formed from one or more resistive heating tracks. The heating element may consist of resistive heating tracks. The resistive heating tracks may be provided on the flexible substrate. The resistive heating tracks may be printed on the flexible substrate, for example using metallic inks. The resistive heating tracks may comprise a single resistive heating track. Alternatively, the resistive heating track may comprise at least two resistive heating tracks. The resistive heating tracks may act as an electrically resistive heater.

The resistive heating tracks may have a temperature coefficient of resistance characteristics such that the resistive heating tracks may act as both a resistive heater and as a temperature sensor.

The heating element, preferably in the form of resistive heating tracks, may be electrically connected to a power supply. The heating element may comprise a plurality of portions. If the heating element is provided in the form of resistive heating tracks, the resistive heating tracks may comprise a plurality of portions or a plurality of resistive heating tracks. Each portion of the heating element may be separately connectable to the power supply. This provides a number of advantages. First, it allows the different portions to be heated for different durations, which may enhance the smoking experience, depending on the nature of the aerosol-forming substrate. Second, it allows the different portions to be heated at different temperatures, which may also enhance the smoking experience, depending on the nature of the aerosol-forming substrate. Third, it allows a particular portion of the heater to be activated at any one time. This allows only a portion of the aerosol-forming substrate to be heated at any one time.

The heater may comprise a power supply. The power supply is preferably configured as a battery. The power supply of the heater may be the battery which is heated by the heater or a different power supply. The power supply may be provided on the flexible substrate. The power supply may be configured as a Lithium-ion battery. Alternatively, the power supply may be a Nickel-metal hydride battery, a Nickel cadmium battery, or a Lithium based battery, for example a Lithium-Cobalt, a Lithium-lron-Phosphate, Lithium Titanate or a Lithium-Polymer battery. As an alternative, the power supply may be another form of charge storage device such as a capacitor. The power supply may require recharging and may have a capacity that enables to store enough energy for one or more usage experiences; for example, the power supply may have sufficient capacity to continuously generate aerosol for a period of around six minutes or for a period of a multiple of six minutes. In another example, the power supply may have sufficient capacity to provide a predetermined number of puffs or discrete activations of the heater.

The power supply may be flat. The power supply may be a flat battery. The power supply may be flexible. The power supply may be a flexible battery. The power supply may be a flat and flexible battery. The power supply may be provided as a flexible flat sheet on the flexible substrate.

The heating element may comprise an induction coil. The heating element may comprise at least two induction coils. The induction coil may be electrically connected to the power supply. The controller electronics may be configured to control the supply of electrical energy from the power supply to the induction coil. The induction coil may be configured to generate an alternating magnetic field.

The heater may further comprise a susceptor. The heater may comprise a susceptor for heating the battery. The susceptor may be mounted on the battery. The susceptor may be provided as an outer layer of the battery.

The susceptor may be flat. The susceptor may be flexible. The susceptor may be provided as a flexible flat sheet on the flexible substrate.

In general, a susceptor is a material that is capable of absorbing electromagnetic energy and converting it to heat. When located in an alternating magnetic field. If the susceptor is conductive, then typically eddy currents are induced by the alternating magnetic field. If the susceptor is magnetic, then typically another effect that contributes to the heating is commonly referred to hysteresis losses. Hysteresis losses occur mainly due to the movement of the magnetic domain blocks within the susceptor, because the magnetic orientation of these will align with the magnetic induction field, which alternates. Another effect contributing to the hysteresis loss is when the magnetic domains will grow or shrink within the susceptor. Commonly all these changes in the susceptor that happen on a nano-scale or below are referred to as "hysteresis losses", because they produce heat in the susceptor. Hence, if the susceptor is both magnetic and electrically conductive, both hysteresis losses and the generation of eddy currents will contribute to the heating of the susceptor. If the susceptor is magnetic, but not conductive, then hysteresis losses will be the only means by which the susceptor will heat, when penetrated by an alternating magnetic field. According to the invention, the susceptor may be electrically conductive or magnetic or both electrically conductive and magnetic. An alternating magnetic field generated by one or several induction coils heat the susceptor, which then transfers the heat to one or both of the battery and the aerosol-forming substrate, such that an aerosol is formed. The heat transfer may be mainly by conduction of heat. Such a transfer of heat is best, if the susceptor is in close thermal contact with one or both of the battery and the aerosol-forming substrate.

The susceptor may be formed from any material that can be inductively heated to a temperature sufficient to one or both of heating the battery and generating an aerosol from the aerosol-forming substrate. A preferred susceptor may comprise or consist of a ferromagnetic material or ferri-magnetic material, for example a ferromagnetic alloy, ferritic iron, or a ferromagnetic steel or stainless steel. A suitable susceptor may be, or comprise, aluminium. Preferred susceptors may be heated to a temperature in excess of 250 degrees Celsius.

Preferred susceptors are metal susceptors, for example stainless steel. However, susceptor materials may also comprise or be made of graphite, molybdenum, silicon carbide, aluminum, niobium, Inconel alloys (austenite nickel-chromium-based superalloys), metallized films, ceramics such as for example zirconia, transition metals such as for example iron, cobalt, nickel, or metalloids components such as for example boron, carbon, silicon, phosphorus, aluminium.

Preferably, the susceptor material is a metallic susceptor material (by metallic is meant a metal in a non-oxide form, which usually is referred to as ceramics). The susceptor may also be a multi-material susceptor and may comprise a first susceptor material and a second susceptor material. In some embodiments, the first susceptor material may be disposed in intimate physical contact with the second susceptor material. The first and/or second susceptor material preferably has a Curie temperature that is below the combustion temperature of the aerosol-forming substrate. The first susceptor material is preferably used primarily to heat the susceptor when the susceptor is placed in a fluctuating electromagnetic field. Any suitable material may be used. For example, the first susceptor material may be aluminium, or may be a ferrous material such as a stainless steel. The second susceptor material is preferably used primarily to indicate when the susceptor has reached a specific temperature, that temperature being the Curie temperature of the second susceptor material. The Curie temperature of the second susceptor material can be used to regulate the temperature of the entire susceptor during operation. Suitable materials for the second susceptor material may include nickel and certain nickel alloys.

By providing a susceptor having at least a first and a second susceptor material, the heating of the aerosol-forming substrate and the temperature control of the heating may be separated. Preferably, the second susceptor material is a magnetic material having a second Curie temperature that is substantially the same as a desired maximum heating temperature. That is, it is preferable that the second Curie temperature is approximately the same as the temperature that the susceptor should be heated to in order to generate an aerosol from the aerosol-forming substrate.

By the term "Curie temperature" is generally understood as the temperature at, which a magnetic material loses its magnetic properties in the absence of an external magnetic field. Hence, the Curie temperature is a temperature at which a ferro- or ferri-magnetic material undergoes a phase change and becomes paramagnetic.

When an induction heating element is employed, the induction heating element may be configured as an external heater as described herein. If the induction heating element is configured as an external heating element, the susceptor element is preferably configured as a cylindrical susceptor at least partly surrounding the cavity or forming the sidewall of the cavity.

The heater may comprise a finishing layer of laminated material that is arranged at least partly covering the heater. The finishing layer may be configured as the outer layer of the heater. The finishing layer may be configured to protect the heater. The finishing layer may be configured fully covering the outer perimeter of the heater. The finishing layer may be configured to enhance one or more of ultraviolet resistance, infrared resistance, printability of branding, overall external design colouring, texture, mechanical resistance, chemical resistance, and other characteristics of the heater as required. The finishing layer may be configured as a wrapper. The finishing layer may be wrapped around the heater.

The electronic device is an aerosol-generating device. The electronic device is an aerosol-generating device and the heater may be further configured for heating an aerosol-generating article as the second heating function.

The invention further relates to an aerosol-generating device comprising a cavity configured for receiving an aerosol-generating article comprising aerosol-forming substrate. The aerosol-generating device further comprises the heater as described herein. The heater may be arranged at least partly coaxially surrounding the outer perimeter of the cavity.

The heater may be configured for heating the aerosol-forming substrate of the aerosol-generating article, when the aerosol-generating article is received in the cavity. To optimize heat transfer from the heater to the aerosol-forming substrate, the heater may be arranged at least partly coaxially surrounding the outer perimeter of the cavity. In this way, the heat can be transferred to the aerosol-forming substrate in a radial inward direction. Preferably, the heater is arranged fully coaxially surrounding the outer perimeter of the cavity.

The battery may serve as the power supply for the aerosol-generating device. The control electronics of the heater may be configured to control the supply of electrical energy from the power supply of the aerosol-generating device to the heating element of the heater. As a further alternative, the heater may comprise the battery and the aerosol-generating device may comprise an additional power supply, preferably an additional battery. The control electronics of the heater may be configured to control the supply of electrical energy from the power supply of the heater and from the additional power supply of the aerosol-generating device to the heating element of the heater. Further to the control electronics of the heater, the aerosol-generating device may comprise a controller. The control electronics of the heater may be configured to control the supply of electrical energy from the power supply of the heater to the heating element. The controller of the aerosol-generating device may be configured to control the supply of electrical energy from the additional power supply of the aerosol-generating device to the heating element of the heater.

The aerosol-generating device may comprise a main body. One or both of the additional power supply and the controller of the aerosol-generating device may be arranged in the main body. The aerosol-generating device may comprise a mouth end portion. The cavity may be arranged in the mouth end portion. The mouth end portion may be integrally formed with the main body. Alternatively, the mouth end portion may be configured removably attachable to the main body. The mouth end portion may comprise a mouthpiece. The mouthpiece may be configured to cover the cavity. Exemplarily, the mouthpiece may be connected with the mouth end portion by a hinge connection. Alternatively, the mouthpiece may be removably attachable to the mouth end portion of the aerosol-generating device. As a further alternative, no mouthpiece is provided and a user directly draws on a proximal end of the aerosol-generating article received in the cavity of the mouth end portion.

The heater may at least partly form a sidewall of the cavity. Heat transfer may be optimized by the heater at least partly forming the sidewall. The heater may fully form the sidewall of the cavity.

As used herein, an 'aerosol-generating device' relates to a device that interacts with an aerosol-forming substrate to generate an aerosol. The aerosol-forming substrate may be part of an aerosol-generating article, for example part of a smoking article. An aerosol-generating device may be a smoking device that interacts with an aerosol-forming substrate of an aerosol-generating article to generate an aerosol that is directly inhalable into a user's lungs thorough the user's mouth. An aerosol-generating device may be a holder. The device may be an electrically heated smoking device. The aerosol-generating device may comprise a housing, electric circuitry, a power supply, a heating chamber and a heating element.

The invention further relates to a system comprising the aerosol-generating device as described herein and an aerosol-generating article comprising aerosol-forming substrate.

As used herein, the term 'aerosol-generating article' refers to an article comprising an aerosol-forming substrate that is capable of releasing volatile compounds that can form an aerosol. For example, an aerosol-generating article may be a smoking article that generates an aerosol that is directly inhalable into a user's lungs through the user's mouth. An aerosol-generating article may be disposable.

The aerosol-generating article may be substantially cylindrical in shape. The aerosol-generating article may be substantially elongate. The aerosol-generating article may have a length and a circumference substantially perpendicular to the length. The aerosol-generating article may be substantially rod shaped. The aerosol-forming substrate may be substantially cylindrical in shape. The aerosol-forming substrate may be substantially elongate. The aerosol-forming substrate may also have a length and a circumference substantially perpendicular to the length. The aerosol-forming substrate may be substantially rod shaped.

The aerosol-generating substrate may comprise an aerosol-former. The aerosol-generating substrate preferably comprises homogenised tobacco material, an aerosol-former and water. Providing homogenised tobacco material may improve aerosol generation, the nicotine content and the flavour profile of the aerosol generated during heating of the aerosol-generating article. Specifically, the process of making homogenised tobacco involves grinding tobacco leaf, which more effectively enables the release of nicotine and flavours upon heating.

The invention further relates to an aerosol-generating system comprising an aerosol-generating article and an electronic device as described herein, wherein the device is an aerosol-generating device.

The invention further relates to a method for operating an electronic device as described herein. The method comprises defining a minimum working temperature for the battery. The method further comprises monitoring a temperature of the battery. The method further comprises heating the battery with the heater when the temperature of the battery is below the minimum temperature, or performing the second heating function when the temperature of the battery is equal to or above the minimum temperature.

Features described in relation to one embodiment may equally be applied to other embodiments of the invention.

The invention will be further described, by way of example only, with reference to the accompanying drawings in which:
Fig. 1 shows an embodiment of an electronic device;
Fig. 2 shows an embodiment of an electronic device; and
Fig. 3 shows an embodiment of an electronic device.

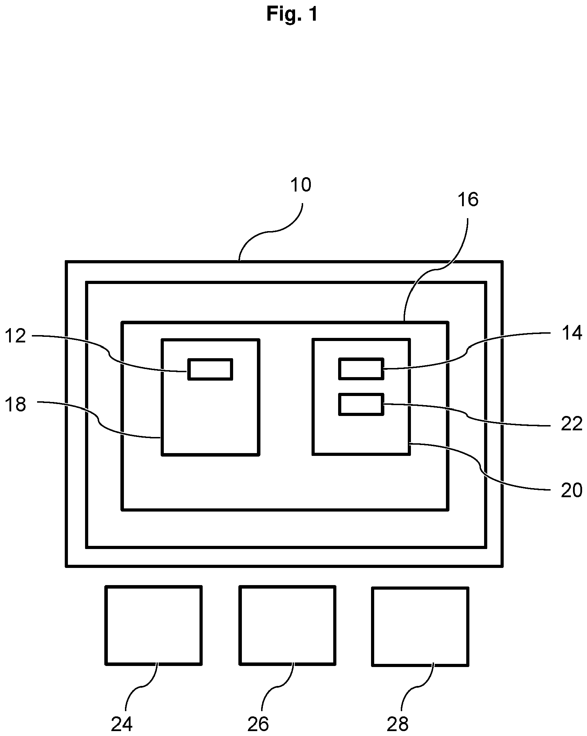

Fig. 1 schematically shows a body of an electronic device 10 comprising a battery 12, and a heater 14 for heating the battery 12. The battery 12 and the heater 14 are mounted on a flexible substrate 16. The battery 12 forms part of a power circuit 18. The heater 14 forms part of a functional circuit 20. The functional circuit 20 further comprises a functional controller unit 22.

The functional circuit 20 can be configured for supporting multiple functions of the heater 14. The heater 14 is an induction heater comprising an induction coil. The heater 14 further comprises a first susceptor in thermal proximity to the battery 12 for heating the battery 12 as a first heating function.

The heater 14 is further configured for performing a second function, wherein the first heating function is different from the second function.

The second function is a second heating function. The heater 14 may comprise a second susceptor being in thermal proximity to an aerosol-generating article 24 for heating the aerosol-generating article 24 as a second heating function. The first and second susceptors may be heated by the same induction coil or by separate coils. The heater 14 may additionally comprise a resistive component in thermal proximity to the battery 12 that can be switched to be electrically connected in series with the induction coil. Thereby, the battery 12 may be additionally heated. The switching may be performed by a temperature-dependent actuation component.

Further described herein is that alternatively to the second function being a second heating function, the second function may be a function of a receiving coil within an auxiliary circuit 26. The function of the receiving coil may be inductively charging the battery 12. The battery 12 may be inductively charged by the auxiliary circuit 26 via the receiving coil. The heater 14 may thus be configured for inductively charging the battery 12 as a second function. The induction coil used for the first heating function and the receiving coil used for the second function may be the same component or may be separate coils.

The heater 14 may be further configured for performing a third function. The second function may be heating the aerosol-generating article 24, and the third function may be inductively charging the battery 12. The induction coil used for one or more of the first and second heating functions and the receiving coil used for the third function may be the same component or may be separate coils.

The functional controller unit 22 comprises a temperature sensor and a memory storage. The functional controller unit 22 further comprises a control unit configured for determining the optimal time and parameters to operate the heater 14 for each of the different functions of the heater 14. The functional controller unit 22 may further comprise, or be connected to, a communication unit able to communicate with an external data source 28 in order to obtain additional data used to determine the optimal time and parameters to operate the heater 14.

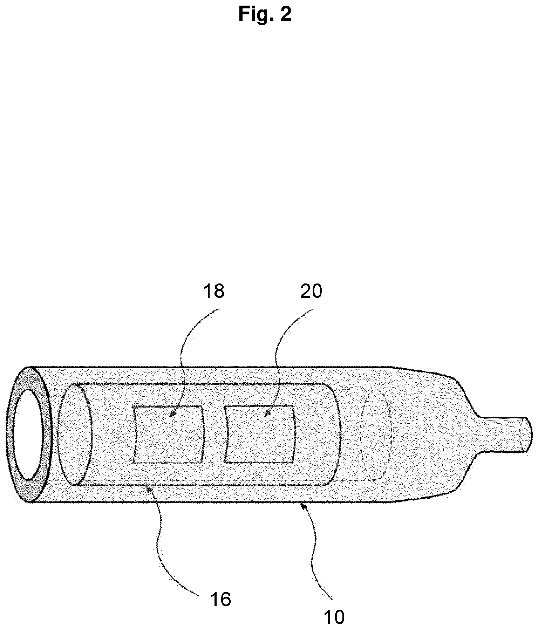

Fig. 2 schematically shows a body of an electronic device 10. The flexible substrate 16 having thereon the battery 12 and the heater 14 is formed into a hollow cylindrical shape. Thereby, the flexible substrate 16 circumscribes a cavity of the device. The electronic device is an aerosol-generating device and the cavity may be a heating chamber.

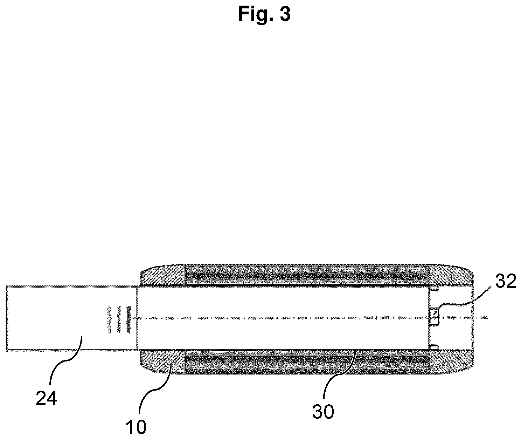

Fig. 3 shows a body of an electronic device 10. The electronic device is an aerosol-generating device. An aerosol-generating article 24 comprising an aerosol-forming substrate can be inserted into a cavity 30 of the aerosol-generating device. At the base of the cavity 30, stopper 32 are arranged. The stopper 32 are configured for preventing over-insertion of the aerosol-generating article 24 into the cavity 30.

The cavity 30 is a heating chamber of the device 10. The battery 12 and the heater 14 are arranged around the cavity 30 within the tubular body of the aerosol-generating device. One or both of the battery 12 and the heater 14 may be arranged on a flexible substrate 16. In addition to heating the battery 12 as a first heating function, the heater 14 is further configured for heating the aerosol-forming substrate of the aerosol-generating article 24 as a second heating function.

## Claims

1. An electronic device (10), comprising:
- a battery (12), and
- a heater (14) for heating the battery (12) as a first heating function of the heater (14),
wherein the heater (14) is further configured for performing a second heating function, wherein the first heating function is different from the second heating function, wherein the device (10) is configured for switching between the first and second heating functions of the heater (14) in dependence of a temperature of the battery (12), wherein the device (10) is an aerosol-generating device (10), and wherein heating an aerosol-forming substrate is the second heating function.

2. The device (10) according to claim 1, wherein the heater (14) comprises an induction coil.

3. The device (10) according to claim 1 or 2, wherein the heater (14) is further configured for performing a third function, preferably, wherein the third function is charging the battery (12), more preferably, wherein the third function is inductively charging the battery (12).

4. The device (10) according to claim 3, wherein the third function is inductively charging the battery (12), wherein the heater (14) comprises a charging coil, and wherein the first heating function is one or both of resistively heating the battery (12) and inductively heating the battery (12).

5. The device (10) according to any of the preceding claims, wherein the heater (14) is configured for resistively heating the battery (12) as the first heating function and, wherein the second heating function is an inductive heating function.

6. The device (10) according to any of the preceding claims, further comprising:
- a heating chamber,
- a first susceptor in thermal contact with the battery (12), and
- a second susceptor in thermal contact with the heating chamber,
wherein the second heating function is inductively heating the heating chamber.

7. The device (10) according to any of the preceding claims, comprising a resistive element for additionally heating the battery (12), the resistive element being serially connectable to the heater (14) based on a temperature-dependent actuation mechanism.

8. The device (10) according to claim 7, wherein the temperature-dependent actuation mechanism includes a bimetallic strip.

9. The device (10) according to any one of the preceding claims, further comprising a controller (22) configured for determining a temperature of the battery (12) and switching between different functions of the heater (14) based on the temperature.

10. The device (10) according to claim 9, further comprising a temperature sensor, wherein the controller (22) is further configured for determining the temperature based on a temperature measured by the temperature sensor.

11. The device (10) according to claim 9 or 10, further comprising a communication unit configured for receiving external data, wherein the controller (22) is further configured for determining the temperature based on external data received by the communication unit.

12. An aerosol-generating system comprising an aerosol-generating article and a device (10) according to any of the preceding claims.

13. A method for operating the electronic device (10) according to any of claims 1 to 11, comprising steps of:
- defining a minimum working temperature for the battery (12),
- monitoring a temperature of the battery (12), and
- heating the battery (12) with the heater (14) when the temperature of the battery (12) is below the minimum temperature, or performing the second heating function when the temperature of the battery (12) is equal to or above the minimum temperature.

## Patentansprüche

1. Elektronische Vorrichtung (10), umfassend:
- eine Batterie (12), und
- eine Heizvorrichtung (14) zum Erwärmen der Batterie (12) als eine erste Heizfunktion der Heizvorrichtung (14),
wobei die Heizvorrichtung (14) ferner zum Ausführen einer zweiten Heizfunktion ausgelegt ist, wobei sich die erste Heizfunktion von der zweiten Heizfunktion unterscheidet, wobei die Vorrichtung (10) zum Umschalten zwischen der ersten und der zweiten Heizfunktion der Heizvorrichtung (14) in Abhängigkeit von einer Temperatur der Batterie (12) ausgelegt ist, wobei die Vorrichtung (10) eine Aerosolerzeugungsvorrichtung (10) ist, und wobei das Erwärmen eines aerosolbildenden Substrats die zweite Heizfunktion ist.

2. Vorrichtung (10) nach Anspruch 1, wobei die Heizvorrichtung (14) eine Induktionsspule umfasst.

3. Vorrichtung (10) nach Anspruch 1 oder 2, wobei die Heizvorrichtung (14) ferner zum Ausführen einer dritten Funktion ausgelegt ist, wobei die dritte Funktion bevorzugt das Laden der Batterie (12) ist, noch bevorzugter, wobei die dritte Funktion das induktive Laden der Batterie (12) ist.

4. Vorrichtung (10) nach Anspruch 3, wobei die dritte Funktion das induktive Laden der Batterie (12) ist, wobei die Heizvorrichtung (14) eine Ladespule umfasst, und wobei die erste Heizfunktion eine oder beide ist von Widerstandserwärmen der Batterie (12) und induktives Erwärmen der Batterie (12).

5. Vorrichtung (10) nach einem beliebigen der vorhergehenden Ansprüche, wobei die Heizvorrichtung (14) zum Widerstandserwärmen der Batterie (12) als erste Heizfunktion ausgelegt ist und wobei die zweite Heizfunktion eine induktive Heizfunktion ist.

6. Vorrichtung (10) nach einem beliebigen der vorhergehenden Ansprüche, ferner umfassend:
- eine Heizkammer,
- einen ersten Suszeptor in thermischem Kontakt mit der Batterie (12), und
- einen zweiten Suszeptor in thermischem Kontakt mit der Heizkammer,
wobei die zweite Heizfunktion ein induktives Erwärmen der Heizkammer ist.

7. Vorrichtung (10) nach einem beliebigen der vorhergehenden Ansprüche, umfassend ein Widerstandselement zum zusätzlichen Erwärmen der Batterie (12), wobei das Widerstandselement basierend auf einem temperaturabhängigen Betätigungsmechanismus mit der Heizvorrichtung (14) in Reihe geschaltet werden kann.

8. Vorrichtung (10) nach Anspruch 7, wobei der temperaturabhängige Betätigungsmechanismus einen Bimetallstreifen beinhaltet.

9. Vorrichtung (10) nach einem beliebigen der vorhergehenden Ansprüche, ferner umfassend eine zum Ermitteln einer Temperatur der Batterie (12) und zum Umschalten zwischen verschiedenen Funktionen der Heizvorrichtung (14) basierend auf der Temperatur ausgelegte Steuerung (22).

10. Vorrichtung (10) nach Anspruch 9, ferner umfassend einen Temperatursensor, wobei die Steuerung (22) ferner zum Ermitteln der Temperatur basierend auf einer von dem Temperatursensor gemessenen Temperatur ausgelegt ist.

11. Vorrichtung (10) nach Anspruch 9 oder 10, ferner umfassend eine zum Empfangen von externen Daten ausgelegte Kommunikationseinheit, wobei die Steuerung (22) ferner zum Ermitteln der Temperatur basierend auf den von der Kommunikationseinheit empfangenen externen Daten ausgelegt ist.

12. Aerosolerzeugungssystem, umfassend einen aerosolerzeugenden Artikel und eine Vorrichtung (10) nach einem beliebigen der vorhergehenden Ansprüche.

13. Verfahren zum Betreiben der elektronischen Vorrichtung (10) nach einem der Ansprüche 1 bis 11, umfassend die Schritte des:
- Definierens einer Mindestbetriebstemperatur für die Batterie (12),
- Überwachens einer Temperatur der Batterie (12), und
- Erwärmens der Batterie (12) mit der Heizvorrichtung (14), wenn die Temperatur der Batterie (12) unter der Mindesttemperatur liegt, oder Ausführens der zweiten Heizfunktion, wenn die Temperatur der Batterie (12) gleich oder höher als die Mindesttemperatur ist.

## Revendications

1. Dispositif électronique (10), comprenant :
- une batterie (12), et
- un dispositif de chauffage (14) pour chauffer la batterie (12) en tant que première fonction de chauffage du dispositif de chauffage (14),
dans lequel le dispositif de chauffage (14) est en outre configuré pour réaliser une deuxième fonction de chauffage, dans lequel la première fonction de chauffage est différente de la deuxième fonction de chauffage, dans lequel le dispositif (10) est configuré pour commuter entre les première et deuxième fonctions de chauffage du dispositif de chauffage (14) en fonction d'une température de la batterie (12), dans lequel le dispositif (10) est un dispositif de génération d'aérosol (10), et dans lequel le chauffage d'un substrat formant aérosol est la deuxième fonction de chauffage.

2. Dispositif (10) selon la revendication 1, dans lequel le dispositif de chauffage (14) comprend une bobine d'induction.

3. Dispositif (10) selon la revendication 1 ou 2, dans lequel le dispositif de chauffage (14) est en outre configuré pour réaliser une troisième fonction, de préférence, dans lequel la troisième fonction est la charge de la batterie (12), de manière davantage préférée, dans lequel la troisième fonction est la charge par induction de la batterie (12).

4. Dispositif (10) selon la revendication 3, dans lequel la troisième fonction est la charge par induction de la batterie (12), dans lequel le dispositif de chauffage (14) comprend une bobine de charge, et dans lequel la première fonction de chauffage est l'une ou les deux parmi le chauffage par résistance de la batterie (12) et le chauffage par induction de la batterie (12).

5. Dispositif (10) selon l'une quelconque des revendications précédentes, dans lequel le dispositif de chauffage (14) est configuré pour chauffer par résistance la batterie (12) en tant que première fonction de chauffage et, dans lequel la deuxième fonction de chauffage est une fonction de chauffage par induction.

6. Dispositif (10) selon l'une quelconque des revendications précédentes, comprenant en outre :
- une chambre de chauffage,
- un premier suscepteur en contact thermique avec la batterie (12), et
- un deuxième suscepteur en contact thermique avec la chambre de chauffage,
dans lequel la deuxième fonction de chauffage est le chauffage par induction de la chambre de chauffage.

7. Dispositif (10) selon l'une quelconque des revendications précédentes, comprenant un élément résistif destiné à chauffer en complément la batterie (12), l'élément résistif pouvant être raccordé en série au dispositif de chauffage (14) sur la base d'un mécanisme d'actionnement dépendant de la température.

8. Dispositif (10) selon la revendication 7, dans lequel le mécanisme d'actionnement dépendant de la température comprend un bilame.

9. Dispositif (10) selon l'une quelconque des revendications précédentes, comprenant en outre un dispositif de commande (22) configuré pour déterminer une température de la batterie (12) et commuter entre différentes fonctions du dispositif de chauffage (14) sur la base de la température.

10. Dispositif (10) selon la revendication 9, comprenant en outre un capteur de température, dans lequel le dispositif de commande (22) est en outre configuré pour déterminer la température sur la base d'une température mesurée par le capteur de température.

11. Dispositif (10) selon la revendication 9 ou 10, comprenant en outre une unité de communication configurée pour recevoir des données externes, dans lequel le dispositif de commande (22) est en outre configuré pour déterminer la température sur la base de données externes reçues par l'unité de communication.

12. Système de génération d'aérosol comprenant un article de génération d'aérosol et un dispositif (10) selon l'une quelconque des revendications précédentes.

13. Procédé pour faire fonctionner le dispositif électronique (10) selon l'une quelconque des revendications 1 à 11, comprenant les étapes consistant à :
- définir une température de travail minimale pour la batterie (12),
- surveiller une température de la batterie (12), et
- chauffer la batterie (12) avec le dispositif de chauffage (14) lorsque la température de la batterie (12) est inférieure à la température minimale, ou réaliser la deuxième fonction de chauffage lorsque la température de la batterie (12) est supérieure ou égale à la température minimale.
